# EUROPEAN PATENT APPLICATION

(11) **EP 4 450 763 A1**
(43) Date of publication of application: **23.10.2024**
(21) Application number: 24163666.1
(22) Date of filing: 14.03.2024
(51) Int. Cl.: F01D 5/28, F01D 5/30, F01D 5/14, F01D 5/32

(54) **AIRFOIL ASSEMBLY WITH A TRUNNION AND SPAR**

(30) Priority: 21.04.2023 US 202318304784
(71) Applicant: General Electric Company, Schenectady, NY 12345 (US)
(72) Inventor: KRAY, Nicholas Joseph, Schenectady, 12345 (US); DAVIS, Tod Winton, Schenectady, 12345 (US); DAGGETT, Nicholas Mark, Schenectady, 12345 (US); SIBBACH, Arthur William, Schenectady, 12345 (US); KRYJ-KOS, Elzbieta, Schenectady, 12345 (US)
(74) Representative: Openshaw & Co.

(57) **Abstract**

An airfoil assembly (130) having a trunnion (134) and a spar (136). The trunnion (134) having an interior surface (162) defining a flared socket (164) with an open top (170). The spar (136) extending from the flared socket (164) and through the open top (170). The spar (136) further having a furcated tail (152) with a set of branches (154) defining an intervening gap (158) between adjacent branches of the set of branches (154)

## Description

### TECHNICAL FIELD

The disclosure generally relates to an airfoil assembly, and more specifically to an airfoil assembly having a trunnion and a spar.

### BACKGROUND

Turbine engines, and particularly gas or combustion turbine engines, are rotary engines that extract energy from a flow of gases passing through a fan with a plurality of fan blades, then into the engine through a series of compressor stages, which include pairs of rotating blades and stationary vanes, through a combustor, and then through a series of turbine stages, which include pairs of rotating blades and stationary vanes. The blades are mounted to rotating disks, while the vanes are mounted to stator disks.

During operation air is brought into the compressor section through the fan section where it is then pressurized in the compressor and mixed with fuel in the combustor for generating hot combustion gases which flow downstream through the turbine stages where the air is expanded and exhausted out an exhaust section. The expansion of the air in the turbine section is used to drive the rotating sections of the fan section and the compressor section. The drawing in of air, the pressurization of the air, and the expansion of the air is done, in part, through rotation of various rotating blades mounted to respective disks throughout the fan section, the compressor section and the turbine section, respectively. The rotation of the rotating blades imparts mechanical stresses along various portions of the blade; specifically, where the blade is mounted to the disk.

In some turbine engines, a variable pitch airfoil can be included, which can be selectively rotated to adjust or otherwise tailor the flow of fluid over the variable pitch airfoil. The variable pitch airfoil is movable through use of a trunnion and a spar. The trunnion can rotate about a rotational axis, which in turn rotates the spar and the variable pitch airfoil. The trunnion is coupled to or otherwise formed with the spar.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a schematic cross-sectional view of a turbine engine in accordance with an exemplary embodiment of the present disclosure.
FIG. 2 is a schematic illustration of an airfoil assembly suitable for use within the turbine engine of FIG. 1, the airfoil assembly including an airfoil, a trunnion, and a spar.
FIG. 3 is a schematic cross-sectional view of the airfoil assembly as seen from sectional line III-III of FIG. 2, further illustrating a furcated tail of the spar having a set of branches defining an intervening gap, the airfoil assembly having a wedge received within the intervening gap.
FIG. 4 is a schematic perspective, exploded view of the airfoil assembly of FIG. 2, further illustrating a rectangular open top of the trunnion.
FIG. 5 is a schematic cross-sectional view of an exemplary airfoil suitable for use as the airfoil assembly of FIG. 2, further illustrating a retention block provided along the furcated tail and wedge.
FIG. 6 is a schematic cross-sectional view of an exemplary airfoil suitable for use as the airfoil assembly of FIG. 2, further illustrating a set of intervening gaps, a set of inserts and the wedge.
FIG. 7 is a schematic, top-down view of an exemplary airfoil assembly suitable for use as the airfoil assembly of FIG. 2, as seen along a rectangular open top of the trunnion, the exemplary airfoil assembly having a set of spacers.
FIG. 8 is a schematic, bottom-up view of the exemplary airfoil assembly of FIG. 7, as seen along a rectangular bottom of the trunnion.

### DETAILED DESCRIPTION

Aspects of the disclosure herein are directed to an airfoil assembly for a turbine engine. The airfoil assembly includes an airfoil, a spar, and a trunnion. The spar couples the airfoil to the trunnion. The spar includes a furcated tail with a set of branches that define an intervening gap. A wedge is received within the intervening gap.

The airfoil assembly, specifically the spar, is retained within the trunnion through the wedge. For purposes of illustration, the present disclosure will be described with respect to an airfoil assembly for a turbine engine, specifically a fan blade of the turbine engine. It will be understood, however, that aspects of the disclosure described herein are not so limited and can have general applicability within other engines or within other portions of the turbine engine. For example, the disclosure can have applicability for an airfoil assembly in other engines or vehicles, and can be used to provide benefits in industrial, commercial, and residential applications.

As used herein, the term "upstream" refers to a direction that is opposite the fluid flow direction, and the term "downstream" refers to a direction that is in the same direction as the fluid flow. The term "fore" or "forward" means in front of something and "aft" or "rearward" means behind something. For example, when used in terms of fluid flow, fore / forward can mean upstream and aft / rearward can mean downstream.

Additionally, as used herein, the terms "radial" or "radially" refer to a direction away from a common center. For example, in the overall context of a turbine engine, radial refers to a direction along a ray extending between a center longitudinal axis of the engine and an outer engine circumference. Furthermore, as used herein, the term "set" or a "set" of elements can be any number of elements, including only one.

Further yet, as used herein, the term "fluid" or iterations thereof can refer to any suitable fluid within the gas turbine engine at least a portion of the gas turbine engine is exposed to such as, but not limited to, combustion gases, ambient air, pressurized airflow, working airflow, or any combination thereof. It is yet further contemplated that the gas turbine engine can be other suitable turbine engine such as, but not limited to, a steam turbine engine or a supercritical carbon dioxide turbine engine. As a non-limiting example, the term "fluid" can refer to steam in a steam turbine engine, or to carbon dioxide in a supercritical carbon dioxide turbine engine.

All directional references (e.g., radial, axial, proximal, distal, upper, lower, upward, downward, left, right, lateral, front, back, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of aspects of the disclosure described herein. Connection references (e.g., attached, coupled, secured, fastened, connected, and joined) are to be construed broadly and can include intermediate members between a collection of elements and relative movement between elements unless otherwise indicated. As such, connection references do not necessarily infer that two elements are directly connected and in fixed relation to one another. The exemplary drawings are for purposes of illustration only and the dimensions, positions, order and relative sizes reflected in the drawings attached hereto can vary.

The term "composite," as used herein is, is indicative of a component having two or more materials. A composite can be a combination of at least two or more metallic, non-metallic, or a combination of metallic and non-metallic elements or materials. Examples of a composite material can be, but not limited to, a polymer matrix composite (PMC), a ceramic matrix composite (CMC), a metal matrix composite (MMC), carbon fibers, a polymeric resin, a thermoplastic resin, bismaleimide (BMI) materials, polyimide materials, an epoxy resin, glass fibers, and silicon matrix materials.

As used herein, a "composite" component refers to a structure or a component including any suitable composite material. Composite components, such as a composite airfoil, can include several layers or plies of composite material. The layers or plies can vary in stiffness, material, and dimension to achieve the desired composite component or composite portion of a component having a predetermined weight, size, stiffness, and strength.

One or more layers of adhesive can be used in forming or coupling composite components. Adhesives can include resin and phenolics, wherein the adhesive can require curing at elevated temperatures or other hardening techniques.

As used herein, PMC refers to a class of materials. By way of example, the PMC material is defined in part by a prepreg, which is a reinforcement material pre-impregnated with a polymer matrix material, such as thermoplastic resin. Non-limiting examples of processes for producing thermoplastic prepregs include hot melt pre-pregging in which the fiber reinforcement material is drawn through a molten bath of resin and powder pre-pregging in which a resin is deposited onto the fiber reinforcement material, by way of non-limiting example electrostatically, and then adhered to the fiber, by way of non-limiting example, in an oven or with the assistance of heated rollers. The prepregs can be in the form of unidirectional tapes or woven fabrics, which are then stacked on top of one another to create the number of stacked composite plies desired for the part.

Multiple layers of prepreg are stacked to the proper thickness and orientation for the composite component and then the resin is cured and solidified to render a fiber reinforced composite part. Resins for matrix materials of PMCs can be generally classified as thermosets or thermoplastics. Thermoplastic resins are generally categorized as polymers that can be repeatedly softened and flowed when heated and hardened when sufficiently cooled due to physical rather than chemical changes. Notable example classes of thermoplastic resins include nylons, thermoplastic polyesters, polyaryletherketones, and polycarbonate resins. Specific example of high-performance thermoplastic resins that have been contemplated for use in aerospace applications include, polyetheretherketone (PEEK), polyetherketoneketone (PEKK), polyetherimide (PEI), polyaryletherketone (PAEK), and polyphenylene sulfide (PPS). In contrast, once fully cured into a hard rigid solid, thermoset resins do not undergo significant softening when heated, but instead thermally decompose when sufficiently heated. Notable examples of thermoset resins include epoxy, bismaleimide (BMI), and polyimide resins.

Instead of using a prepreg, in another non-limiting example, with the use of thermoplastic polymers, it is possible to utilize a woven fabric. Woven fabric can include, but is not limited to, dry carbon fibers woven together with thermoplastic polymer fibers or filaments. Non-prepreg braided architectures can be made in a similar fashion. With this approach, it is possible to tailor the fiber volume of the part by dictating the relative concentrations of the thermoplastic fibers and reinforcement fibers that have been woven or braided together. Additionally, different types of reinforcement fibers can be braided or woven together in various concentrations to tailor the properties of the part. For example, glass fibers, carbon fibers, and thermoplastic fibers could all be woven together in various concentrations to tailor the properties of the part. The carbon fibers provide the strength of the system, the glass fibers can be incorporated to enhance the impact properties, which is a design characteristic for parts located near the inlet of the engine, and the thermoplastic fibers provide the binding for the reinforcement fibers.

In yet another non-limiting example, resin transfer molding (RTM) can be used to form at least a portion of a composite component. Generally, RTM includes the application of dry fibers or matrix material to a mold or cavity. The dry fibers or matrix material can include prepreg, braided material, woven material, or any combination thereof.

Resin can be pumped into or otherwise provided to the mold or cavity to impregnate the dry fibers or matrix material. The combination of the impregnated fibers or matrix material and the resin are then cured and removed from the mold. When removed from the mold, the composite component can require post-curing processing.

It is contemplated that RTM can be a vacuum assisted process. That is, the air from the cavity or mold can be removed and replaced by the resin prior to heating or curing. It is further contemplated that the placement of the dry fibers or matrix material can be manual or automated.

The dry fibers or matrix material can be contoured to shape the composite component or direct the resin. Optionally, additional layers or reinforcing layers of a material differing from the dry fiber or matrix material can also be included or added prior to heating or curing.

As used herein, CMC refers to a class of materials with reinforcing fibers in a ceramic matrix. Generally, the reinforcing fibers provide structural integrity to the ceramic matrix. Some examples of reinforcing fibers can include, but are not limited to, non-oxide silicon-based materials (e.g., silicon carbide, silicon nitride, or mixtures thereof), non-oxide carbon-based materials (e.g., carbon), oxide ceramics (e.g., silicon oxycarbides, silicon oxynitrides, aluminum oxide (Al₂O₃), silicon dioxide (SiO₂), aluminosilicates such as mullite, or mixtures thereof), or mixtures thereof.

Some examples of ceramic matrix materials can include, but are not limited to, non-oxide silicon-based materials (e.g., silicon carbide, silicon nitride, or mixtures thereof), oxide ceramics (e.g., silicon oxycarbides, silicon oxynitrides, aluminum oxide (Al₂O₃), silicon dioxide (SiO₂), aluminosilicates, or mixtures thereof), or mixtures thereof. Optionally, ceramic particles (e.g., oxides of Si, Al, Zr, Y, and combinations thereof) and inorganic fillers (e.g., pyrophyllite, wollastonite, mica, talc, kyanite, and montmorillonite) can also be included within the ceramic matrix.

Generally, particular CMCs can be referred to as their combination of type of fiber/type of matrix. For example, C/SiC for carbon-fiber-reinforced silicon carbide; SiC/SiC for silicon carbide-fiber-reinforced silicon carbide, SiC/SiN for silicon carbide fiber-reinforced silicon nitride; SiC/SiC-SiN for silicon carbide fiber-reinforced silicon carbide/silicon nitride matrix mixture, etc. In other examples, the CMCs can be comprised of a matrix and reinforcing fibers comprising oxide-based materials such as aluminum oxide (Al₂O₃), silicon dioxide (SiO₂), aluminosilicates, and mixtures thereof. Aluminosilicates can include crystalline materials such as mullite (3Al₂O₃•2SiO₂), as well as glassy aluminosilicates.

In certain non-limiting examples, the reinforcing fibers may be bundled and/or coated prior to inclusion within the matrix. For example, bundles of the fibers may be formed as a reinforced tape, such as a unidirectional reinforced tape. A plurality of the tapes may be laid up together to form a preform component. The bundles of fibers may be impregnated with a slurry composition prior to forming the preform or after formation of the preform. The preform may then undergo thermal processing, and subsequent chemical processing to arrive at a component formed of a CMC material having a desired chemical composition. For example, the preform may undergo a cure or burn-out to yield a high char residue in the preform, and subsequent melt-infiltration with silicon, or a cure or pyrolysis to yield a silicon carbide matrix in the preform, and subsequent chemical vapor infiltration with silicon carbide. Additional steps may be taken to improve densification of the preform, either before or after chemical vapor infiltration, by injecting it with a liquid resin or polymer followed by a thermal processing step to fill the voids with silicon carbide. CMC material as used herein may be formed using any known or hereinafter developed methods including but not limited to melt infiltration, chemical vapor infiltration, polymer impregnation pyrolysis (PIP), or any combination thereof.

Such materials, along with certain monolithic ceramics (i.e., ceramic materials without a reinforcing material), are particularly suitable for higher temperature applications. Additionally, these ceramic materials are lightweight compared to superalloys, yet can still provide strength and durability to the component made therefrom. Therefore, such materials are currently being considered for many gas turbine components used in higher temperature sections of gas turbine engines, such as airfoils (e.g., turbines, and vanes), combustors, shrouds and other like components, that would benefit from the lighter-weight and higher temperature capability these materials can offer.

The term "metallic" as used herein is indicative of a material that includes metal such as, but not limited to, titanium, iron, aluminum, stainless steel, and nickel alloys. A metallic material or alloy can be a combination of at least two or more elements or materials, where at least one is a metal.

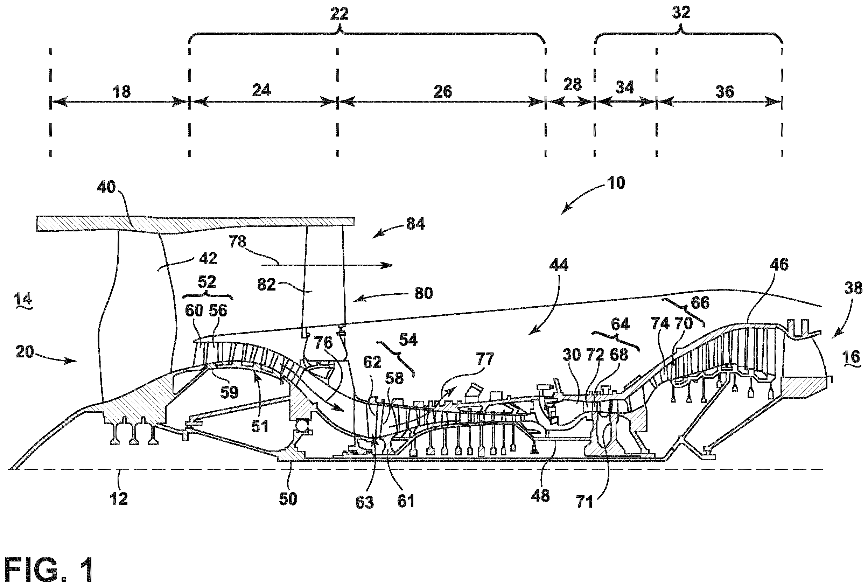

FIG. 1 is a schematic cross-sectional diagram of a turbine engine 10 for an aircraft. The turbine engine 10 has a generally longitudinally extending axis or centerline 12 extending forward 14 to aft 16. The turbine engine 10 includes, in downstream serial flow relationship, a fan section 18 including a fan 20, a compressor section 22 including a booster or low pressure (LP) compressor 24 and a high pressure (HP) compressor 26, a combustion section 28 including a combustor 30, a turbine section 32 including an HP turbine 34, and an LP turbine 36, and an exhaust section 38.

The fan section 18 includes a fan casing 40 surrounding the fan 20. The fan 20 includes a plurality of fan blades 42 disposed radially about the engine centerline 12. The HP compressor 26, the combustor 30, and the HP turbine 34 form an engine core 44 of the turbine engine 10, which generates combustion gases. The engine core 44 is surrounded by a core casing 46, which can be coupled with the fan casing 40.

An HP shaft or spool 48 disposed coaxially about the engine centerline 12 of the turbine engine 10 drivingly connects the HP turbine 34 to the HP compressor 26. An LP shaft or spool 50, which is disposed coaxially about the engine centerline 12 of the turbine engine 10 within the larger diameter annular HP spool 48, drivingly connects the LP turbine 36 to the LP compressor 24 and fan 20. The spools 48, 50 are rotatable about the engine centerline and couple to a plurality of rotatable elements, which can collectively define a rotor 51.

The LP compressor 24 and the HP compressor 26 respectively include a plurality of compressor stages 52, 54, in which a set of compressor blades 56, 58 rotate relative to a corresponding set of static compressor vanes 60, 62 to compress or pressurize the stream of fluid passing through the stage. In a single compressor stage 52, 54, multiple compressor blades 56, 58 can be provided in a ring and can extend radially outward relative to the engine centerline 12, from a blade platform to a blade tip, while the corresponding static compressor vanes 60, 62 are positioned upstream of and adjacent to the rotating compressor blades 56, 58. It is noted that the number of blades, vanes, and compressor stages shown in FIG. 1 were selected for illustrative purposes only, and that other numbers are possible.

The compressor blades 56, 58 for a stage of the compressor can be mounted to (or integral to) a disk 61, which is mounted to the corresponding one of the HP and LP spools 48, 50. The static compressor vanes 60, 62 for a stage of the compressor can be mounted to the core casing 46 in a circumferential arrangement.

The HP turbine 34 and the LP turbine 36 respectively include a plurality of turbine stages 64, 66, in which a set of turbine blades 68, 70 are rotated relative to a corresponding set of static turbine vanes 72, 74, also referred to as a nozzle, to extract energy from the stream of fluid passing through the stage. In a single turbine stage 64, 66, multiple turbine blades 68, 70 can be provided in a ring and can extend radially outward relative to the engine centerline 12 while the corresponding static turbine vanes 72, 74 are positioned upstream of and adjacent to the rotating turbine blades 68, 70. It is noted that the number of blades, vanes, and turbine stages shown in FIG. 1 were selected for illustrative purposes only, and that other numbers are possible.

The turbine blades 68, 70 for a stage of the turbine can be mounted to a disk 71, which is mounted to the corresponding one of the HP and LP spools 48, 50. The turbine vanes 72, 74 for a stage of the compressor can be mounted to the core casing 46 in a circumferential arrangement.

Complementary to the rotor portion, the stationary portions of the turbine engine 10, such as the static vanes 60, 62, 72, 74 among the compressor and turbine sections 22, 32 are also referred to individually or collectively as a stator 63. As such, the stator 63 can refer to the combination of non-rotating elements throughout the turbine engine 10.

In operation, the airflow exiting the fan section 18 is split such that a portion of the airflow is channeled into the LP compressor 24, which then supplies a pressurized airflow 76 to the HP compressor 26, which further pressurizes the air. The pressurized airflow 76 from the HP compressor 26 is mixed with fuel in the combustor 30 and ignited, thereby generating combustion gases. Some work is extracted from these gases by the HP turbine 34, which drives the HP compressor 26. The combustion gases are discharged into the LP turbine 36, which extracts additional work to drive the LP compressor 24, and the exhaust gas is ultimately discharged from the turbine engine 10 via the exhaust section 38. The driving of the LP turbine 36 drives the LP spool 50 to rotate the fan 20 and the LP compressor 24.

A portion of the pressurized airflow 76 can be drawn from the compressor section 22 as bleed air 77. The bleed air 77 can be drawn from the pressurized airflow 76 and provided to engine components requiring cooling. The temperature of pressurized airflow 76 entering the combustor 30 is significantly increased above the bleed air temperature. The bleed air 77 may be used to reduce the temperature of the core components downstream of the combustor 30. The bleed air 77 can also be utilized by other systems.

A remaining portion of the airflow, referred to as a bypass airflow 78, bypasses the LP compressor 24 and engine core 44 and exits the turbine engine 10 through a stationary vane row, and more particularly an outlet guide vane assembly 80, comprising a plurality of airfoil guide vanes 82, at a fan exhaust side 84. More specifically, a circumferential row of radially extending airfoil guide vanes 82 are utilized adjacent the fan section 18 to exert some directional control of the bypass airflow 78.

Some of the air supplied by the fan 20 can bypass the engine core 44 and be used for cooling of portions, especially hot portions, of the turbine engine 10, and/or used to cool or power other aspects of the aircraft. In the context of a turbine engine, the hot portions of the engine are normally downstream of the combustor 30, especially the turbine section 32, with the HP turbine 34 being the hottest portion as it is directly downstream of the combustion section 28. Other sources of cooling fluid can be, but are not limited to, fluid discharged from the LP compressor 24 or the HP compressor 26.

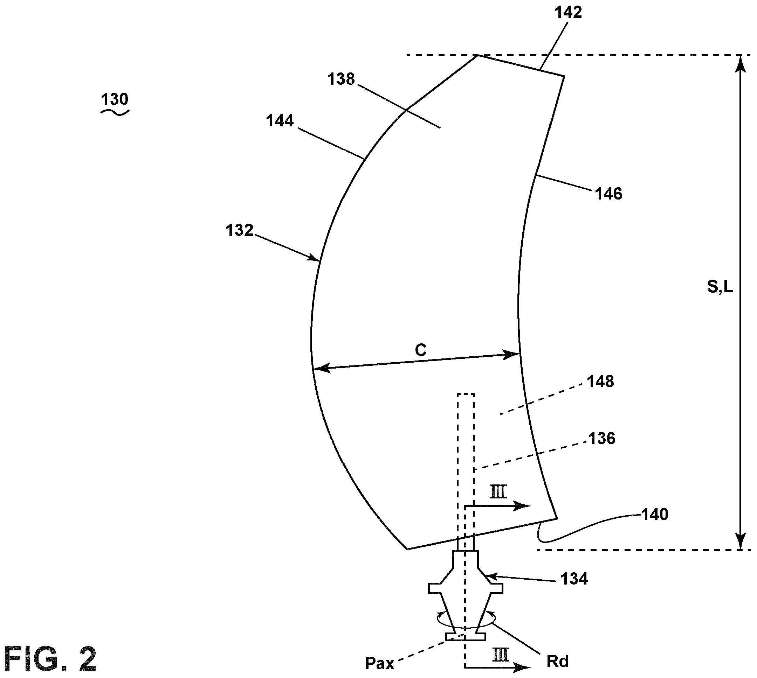

FIG. 2 is schematic illustration of an airfoil assembly 130 suitable for use within the turbine engine 10 of FIG. 1. The airfoil assembly 130 can include an airfoil 132 that is any suitable airfoil of the turbine engine 10. As a non-limiting example, the airfoil 132 can be a blade of the plurality of fan blades 42, or a blade from the compressor blades 56, 58 or the turbine blades 68, 70. It is contemplated that the airfoil 132 can be a blade, vane, airfoil, or other component of any turbine engine, such as, but not limited to, a gas turbine engine, a turboprop engine, a turboshaft engine, a ducted turbofan engine, an unducted turbofan engine or an open rotor turbine engine.

The airfoil 132 can include a wall 138 bounding an interior 148. The wall 138 can extend between a leading edge 144 and a trailing edge 146 to define a chordwise direction (C). The wall 138 can further extend between a root 140 and a tip 142 to define a spanwise direction (S). The wall 138 can be a composite wall made of one or more layers of composite material. The one or more layers of material can be applied during the same stage or different stages of the manufacturing of the airfoil 132.

By way of non-limiting example, wall 138 can include at least a polymer matrix composite (PMC) portion or a polymeric portion. The polymer matrix composite can include, but is not limited to, a matrix of thermoset (epoxies, phenolics) or thermoplastic (polycarbonate, polyvinylchloride, nylon, acrylics) and embedded glass, carbon, steel, or Kevlar fibers.

The airfoil assembly 130 can further include a spar 136 and a trunnion 134. The spar 136 can extend into the interior 148. The spar 136 can extend from the root 140. The spar 136 can be operably coupled to the trunnion 134. The spar 136 can be any suitable material such as, but not limited to, a composite material. The spar 136 can be a metal composite. The trunnion 134 can include any suitable material such as, but no limited to, a metallic material or a composite material. It will be appreciated that the term composite material can further include metals but with a composite architecture (e.g., a metal matrix composite). In the case of a composite material, the spar 136 and/or the trunnion 134 can be any suitable composite material such as a 2D or 3D composite, a laminate skin, a woven or a braided composite, or any other suitable composite.

The airfoil 132 has a span length (L) measured along the spanwise direction S from the root 140 at 0% the span length (L) to the tip 142 at 100% the span length (L). An entirety of the spar 136 can be located below 20% of the span length (L). Alternatively, the spar 136 can extend past 20% of the span length (L).

During operation of the airfoil assembly 130, the trunnion 134 can rotate about a pitch axis (Pax) in a rotational direction (Rd). As the spar 136 couples the trunnion 134 to the airfoil 132, rotation of the trunnion 134 in the rotational direction (Rd) causes the airfoil 132 to rotate about the pitch axis (Pax). This rotation can be used to control the pitch of the airfoil assembly 130 such that the airfoil assembly 130 is defined as a variable pitch airfoil assembly. The pitch of the airfoil assembly 130 can be varied based on the operation or intended operation of the turbine engine (e.g., the turbine engine 10 of FIG. 1) that the airfoil assembly 130 is provided on.

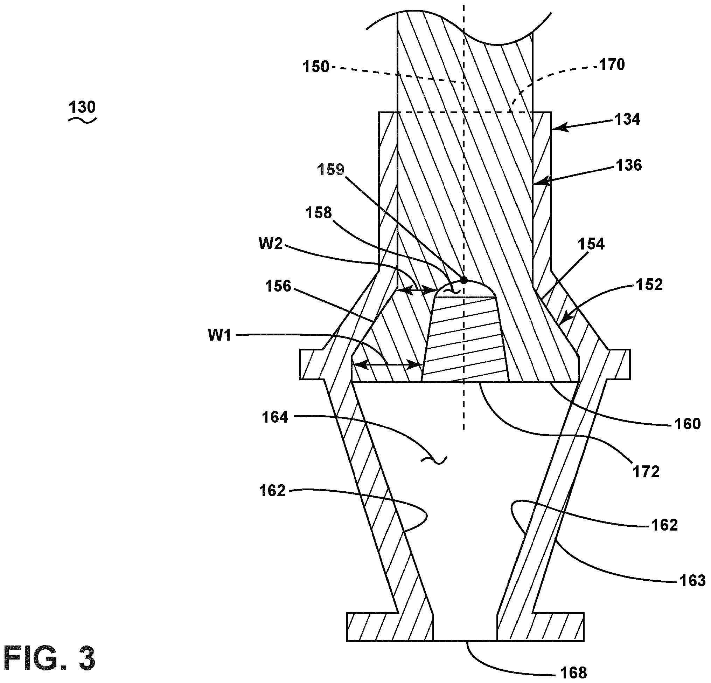

FIG. 3 is a schematic cross-sectional view of the airfoil assembly 130 as seen from sectional line III-III of FIG. 2. The airfoil 132 (FIG. 2) is removed from the airfoil assembly 130 for illustrative purposes.

The trunnion 134 includes a wall 163 with an interior surface 162 at least a partially defining a flared socket 164 of the trunnion 134. The flared socket 164 extends between an open top 170 and a bottom 168. The spar 136 extends through the open top 170 and into the interior 148. The bottom 168 can be an open bottom or a sealed/closed off bottom. The flared socket 164 can take any suitable shape with at least one flared cross section, as illustrated.

The spar extends along a centerline axis 150 and terminates at a first end 160 within the flared socket 164. The spar 136 includes a furcated tail 152 with a set of branches. As a non-limiting example, the set of branches include a first branch 154 and a second branch 156 that define an intervening gap 158 therebetween. The intervening gap 158 extends axially into the spar 136 and terminates at an apex 159. A width of the first branch 154 and the second branch 156 varies along the axial extent of furcated tail 152. As a non-limiting example, each branch of the set of branches includes a maximum width (W1) and a minimum width (W2) defined as the maximum and minimum radial distances, respectively, between the intervening gap 158 and a radially outward portion of the furcated tail 152 from the intervening gap 158. The maximum width (W1) can be provided axially nearer the first end 160 than the minimum width (W2). As a non-limiting example, the maximum width (W1) can be provided at the first end 160 while the minimum width (W2) can be provided axially nearest the apex 159. The spar 136 can be symmetric or asymmetric about the centerline axis 150.

A wedge 172 can be received within the intervening gap 158. The wedge 172 can be held in place within the intervening gap 158 through frictional contact. Alternatively, the wedge 172 can be coupled to the spar 136 through any suitable coupling method such as, but not limited to, bonding, curing, welding, adhesion, fastening, or the like. The wedge 172 can be any suitable material. As a non-limiting example, the wedge 172 can include a metallic material or a composite material. As a non-limiting example, the airfoil assembly 130 can include the spar 136 including a composite material, the trunnion 134 including a metallic material and the wedge 172 including a metallic material. The wedge 172, as illustrated, is a solid body. However, it will be appreciated that an interior of the wedge 172 or at least a portion of the wedge 172 can be hollow.

The wedge 172 is used to retain the spar 136 within the trunnion 134. When received within the intervening gap 158, the wedge 172 pushes the spar 136, specifically the furcated tail 152 radially outward, with respect to the centerline axis 150, such that the spar 136 is held in contact against the interior surface 162 of the trunnion 134. While a gap is illustrated between the wedge 172 and the spar 136, it will be appreciated that the wedge 172 can be sized to fill an entirety of the intervening gap 158.

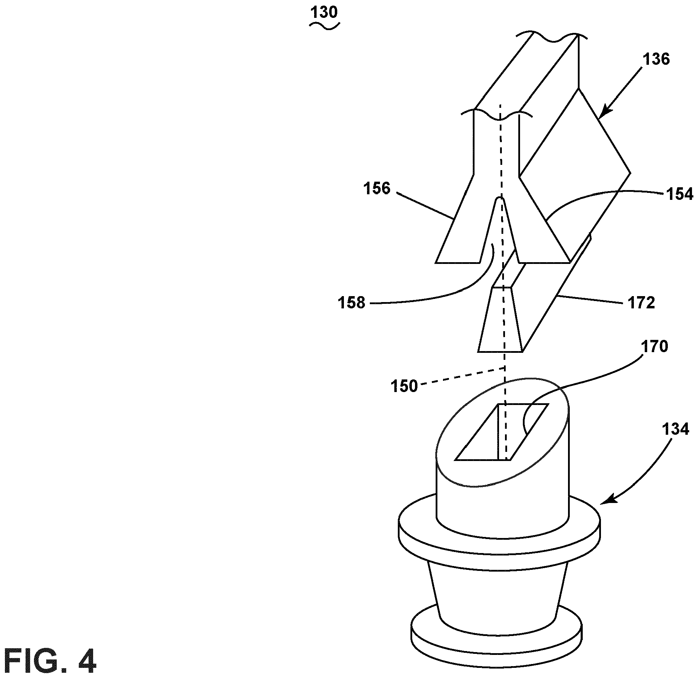

FIG. 4 is a schematic perspective, exploded view of the airfoil assembly 130 of FIG. 3. As illustrated, the spar 136, and the wedge 172 can be polygonal (e.g., non-circular). As a non-liming example, the spar 136 and the wedge 172 can each include a rectangular cross section when cut along a horizontal plane that is perpendicular to the centerline axis 150. The open top 170 can have a corresponding cross section to the spar 136. As a non-limiting example, the open top 170 can have a rectangular cross section when viewed along the horizontal plane. The rectangular cross section can be provided along an entirety of the flared socket 164 (FIG. 3).

It is contemplated that providing a trunnion 134 with the top opening 170 having a corresponding cross section to the cross section of the spar 136 is advantageous as there is a smooth transition between the spar 136 and the trunnion 134. This, in turn, increases the total number of points of contact between the trunnion 134 and the spar 136, meaning that the spar 136 will not move, rock or shake undesirably within the trunnion 134.

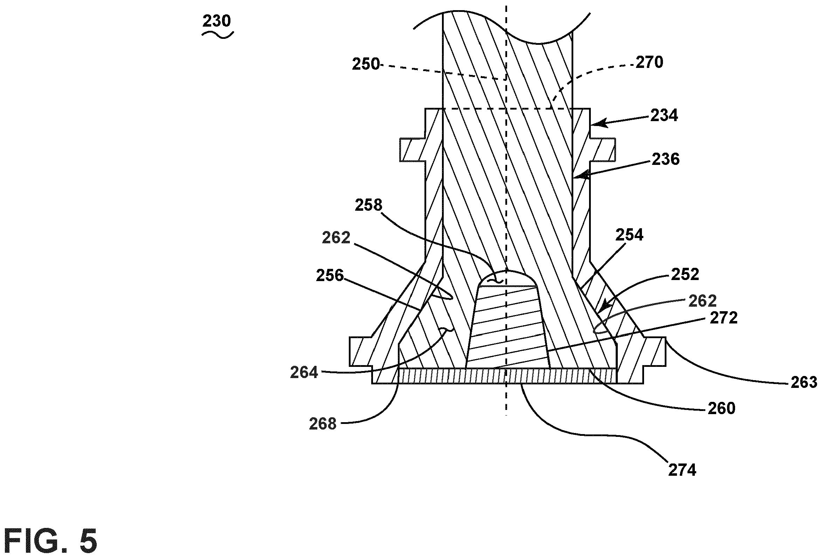

FIG. 5 is a schematic cross-sectional view of an exemplary airfoil 230 suitable for use as the airfoil assembly 130 of FIG. 3. The airfoil assembly 230 is similar to the airfoil assembly 130; therefore, like parts will be identified with like numerals increased to the 200 series with it being understood that description of the airfoil assembly 130 applies to the airfoil assembly 230 unless noted otherwise.

The airfoil assembly 230 includes a trunnion 234 and a spar 236. The trunnion 234 includes a wall 263 defining an interior surface 262 at least partially defining a flared socket 264 that extends between an open top 270 and a bottom 268. The spar 236 extends along a centerline axis 250 and terminates within the flared socket 264 at a first end 260. The spar 236 includes a furcated tail 252 with at least a first branch 254 and a second branch 256. An intervening gap 258 is defined between the first branch 254 and the second branch 256. A wedge 272 can be received within the intervening gap 258.

The airfoil assembly 230 is similar to the airfoil assembly 130 in that it uses the wedge 272 to retain the spar 236 within the trunnion 234. The airfoil assembly 230, however, further includes a retention block 274 within the flared socket 264 that confronts the first end 260 and the wedge 272. The retention block 274 is provided inwardly from the furcated tail 152 in the spanwise direction (S) (FIG. 3). The retention block 274 pushes against at least the wedge 272 and the furcated tail 252 to retain the wedge 272 within the intervening gap 258. The retention block 274 can be secured within the flared socket 264 through any suitable method. As a non-limiting example, at least a portion of the interior surface 262 can include a threaded section and the retention block 274 can include an opposing thread such that the retention block 274 can be threaded into the trunnion 234. Alternatively, the retention block 274 can be held in place through frictional contact or other coupling methods such as, but not limited to, bonding, adhesion, welding, or fastening. The retention block 274 can be provided along any suitable portion of the airfoil assembly 230. As a non-limiting example, the retention block 274 can be sized to fit over the bottom 268 of the trunnion 234. It is contemplated that the bottom 268 can include a threaded section such that the retention block 274 can be threaded over or otherwise into the bottom 268 and essentially act as a cap provided at the bottom 268 of the trunnion 234.

The retention block 274 can be coupled to the trunnion 234 and/or the spar 236 through any suitable method such as, but not limited to, threading, bonding, fastening or adhesion with the trunnion 234 or the spar 236. It is further contemplated that additional components can be included to couple the retention block 274 to the trunnion 234 and/or spar 236. As a non-limiting example, the trunnion 234 can include a threaded section corresponding to a threaded section of the retention block 274. A groove can be carved into the threaded section of the retention block 274 and/or the trunnion 234 such that the groove runs transverse the threads. The retention block 274 can be threaded to the trunnion 234, and an insert (e.g., a thread stake) can be placed into the groove to effectively lock the retention block 274 and the trunnion 234 together.

The retention block 274 can be integrally formed with, coupled to, or otherwise provided against the wedge 272. As a non-limiting example, the wedge 272 and the retention block 274 can be integrally formed such that they form a unitary body.

The trunnion 234 can take any suitable shape. As a non-limiting example, the trunnion 234 can be sized such that the retention block 274 is at least partially disposed within the flared socket 264 against a respective portion of the first end 260. As a non-limiting example, the bottom 268 can be sized such that retention block 274 can fit through an opening along the bottom 268 and confront the interior surface 262 of the trunnion 234.

The retention block 274 can include any suitable material. As a non-limiting example, the retention block 274 can include a composite material or a metallic material.

The retention block 274 can be used to secure the wedge 272 within the intervening gap 258. The retention block 274 can further be used to limit an axial movement of the spar 236 within the flared socket 264, with respect to the centerline axis 250.

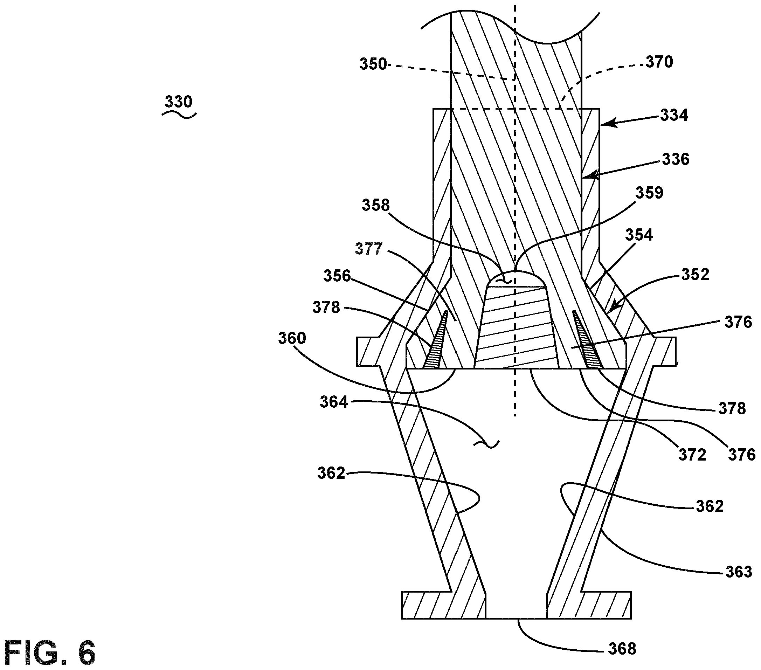

FIG. 6 is a schematic cross-sectional view of an exemplary airfoil assembly 330 suitable for use as the airfoil assembly of FIG. 3. The airfoil assembly 330 is similar to the airfoil assembly 130, 230; therefore, like parts will be identified with like numerals increased to the 300 series with it being understood that description of the airfoil assembly 130, 230 applies to the airfoil assembly 330 unless noted otherwise.

The airfoil assembly 330 includes a trunnion 334 and a spar 336. The trunnion 334 includes a wall 363 defining an interior surface 362 at least a partially defining a flared socket 364 that extends between an open top 370 and a bottom 368. The spar 336 extends along a centerline axis 350 and terminates within the flared socket 364 at a first end 360. The spar 336 includes a furcated tail 352 with at least a first branch 354 and a second branch 356. The furcated tail 352 can define a set of intervening gaps 358, with one gap of the set of intervening gaps 358 sized to receive a wedge 372. The wedge extends axially into the spar 336 and terminates at an apex 359.

The airfoil assembly 330 is similar to the airfoil assembly 130, 230 in that it uses the wedge 272 to retain the spar 236 within the trunnion 234. The furcated tail 352, however, further includes a third branch 376 and a fourth branch 377 such that the set of intervening gaps 358 includes multiple intervening gaps. As a non-limiting example, the set of intervening gaps 358 can include a first intervening gap, a second intervening gap, and a third intervening gap, with the largest of the three intervening gaps being provided between the other two intervening gaps. It will be appreciated that the set of intervening gaps 358 can be symmetric or asymmetric about the centerline axis 350. There can be any number of two or more intervening gaps in the set of intervening gaps 358.

A set of inserts 378 can be provided within a remainder of the set of intervening gaps 358 that do not include the wedge 372. The set of inserts 378 can be used to increase the overall radial thickness of the furcated tail 352. The set of inserts 378 can include any suitable material. As a non-limiting example, the set of inserts 378 can include a composite material. As a non-limiting example, both of the spar 336 and the set of inserts 378 can include a composite material. The set of inserts 378 can be bonded to the spar 336 such that the set of inserts 378 and the spar 336 form a unitary body.

Each intervening gap of the set of intervening gaps 358 can be defined by a respective cross section. It will be appreciated that the cross section between the intervening gaps of the set of intervening gaps 358 can be the same or different. As a non-limiting example, the intervening gap of the set of intervening gaps 358 that houses the wedge 372 can be larger than the intervening gaps of the set of intervening gaps 358 that house the set of insert 378. The set of intervening gaps 358 can be symmetric or asymmetric about the centerline axis 350.

The set of inserts 378 can be retained within the respective gaps of the set of intervening gaps 358 through any suitable method such as, but not limited to, bonding. As a non-limiting example, the set of inserts 378 can be pressed into the respective gaps of the set of intervening gaps 358 and held in contact with the set of intervening gaps 358 through use of a retention block (e.g., the retention block 274 of FIG. 5).

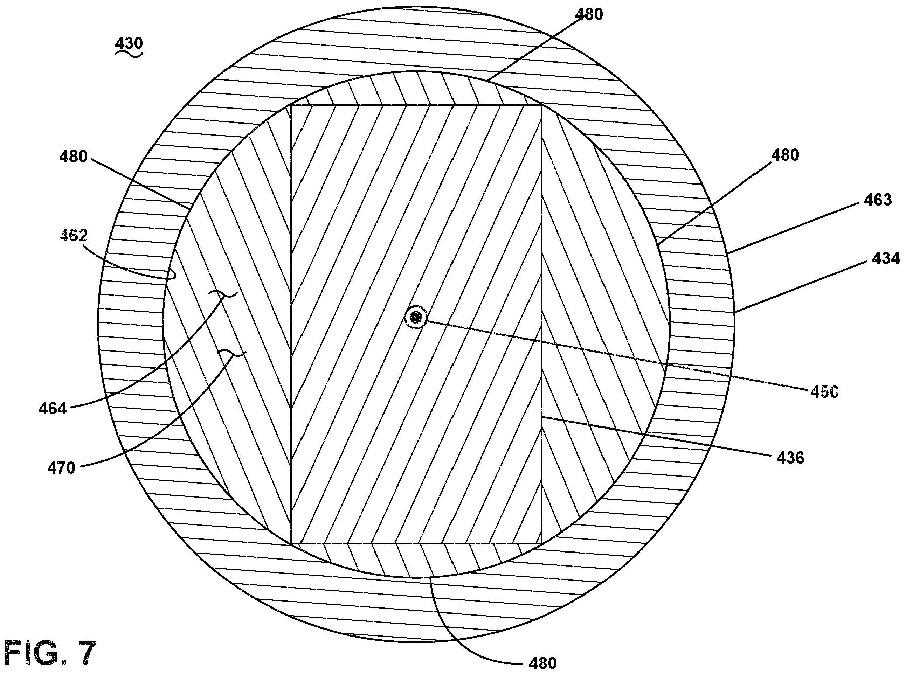

FIG. 7 is a schematic, top-down view of an exemplary airfoil assembly 430 suitable for use as the airfoil assembly 130 of FIG. 3 The airfoil assembly 430 is similar to the airfoil assembly 130, 230, 330; therefore, like parts will be identified with like numerals increased to the 400 series with it being understood that description of the airfoil assembly 130, 230, 330 applies to the airfoil assembly 430 unless noted otherwise.

The airfoil assembly 430 includes a trunnion 434 and a spar 436. The trunnion 434 includes a wall 463 defining an interior surface 462 and an open top 470. The spar 436 extends along a centerline axis 450. The illustrated view is of a top-down view of a horizontal plane that is perpendicular to the centerline axis 450 and cuts the trunnion 434 near the open top 470.

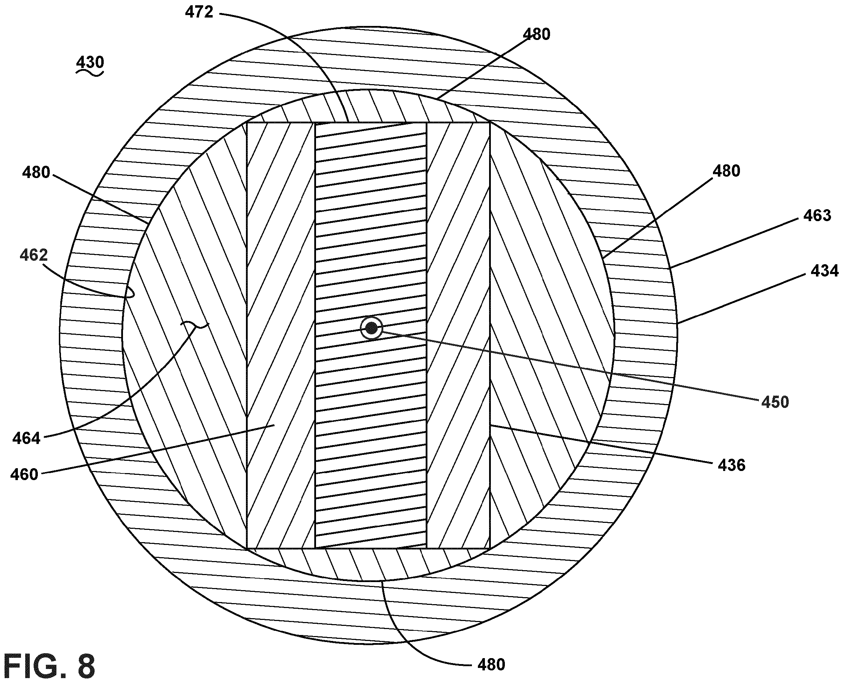

The airfoil assembly 430 is similar to the airfoil assembly 130, 230, 330 in that it uses a wedge 472 (FIG. 8) to retain the spar 436 within the trunnion 434. The trunnion 434 and the spar 436, however, include varying cross sections when viewed along a horizontal plane that is perpendicular to the centerline axis 450. As a non-liming example, the open top 470 includes a circular cross section that circumscribes a rectangular cross section of the spar 436. A set of spacers 480 can be provided to fill the gap between the interior surface 462 and the spar 436. There can be any number of one or more spacers in the set of spacers 480 that extend continuously or non-continuously about the centerline axis 450.

FIG. 8 is a schematic, bottom-up view of the exemplary airfoil assembly 430 of FIG. 7. FIG. 8 is a bottom-up view along a horizontal plane that is perpendicular to the centerline axis 450 and runs along a first end 460 of the spar 436. The spar 436 terminates at the first end 460. The bottom (e.g., the bottom 168 of FIG. 3) can have a varying cross section with respect to spar 436 at the first end 460. The set of spacers 480 can be used to fill the gap between the interior surface 462 and the spar 436.

The set of spacers 480 can extend along any suitable portion of the centerline axis 450. As a non-limiting example, the set of spacers 480 can terminate at the first end 460 of the spar 436 and at the open top 470 of the trunnion 434. As a non-limiting example, at last a portion of the set of spacers 480 can extend axially beyond, with respect to the centerline axis 450, the first end 460 and/or the open top 470.

Benefits associated with the present disclosure include an airfoil assembly with a decreased complexity when compared to a conventional airfoil assembly. For example, the conventional airfoil assembly including a spar and trunnion requires additional structure to ensure that the airfoil of the conventional airfoil assembly is coupled to the trunnion. For example, the conventional airfoil assembly can require a physical connection or mechanical connection between the spar and the trunnion. This physical or mechanical connection between the spar and the trunnion results in a relatively complex airfoil assembly when compared to the airfoil assembly as described herein. The conventional airfoil assembly can further require that the spar is physically coupled to or formed with the trunnion, which in turn can make assembling and disassembling (e.g., during maintenance) difficult. The airfoil assembly, as described herein, however, includes the spar with a furcated tail and the intervening gap with the wedge received within the intervening gap. The wedge is used to retain the spar within the trunnion without having to physically couple (e.g., through welding, adhesion, or fastening) the spar to the trunnion. This configuration of the airfoil assembly greatly reduces the complexity of the airfoil assembly with respect to the conventional airfoil assembly.

To the extent not already described, the different features and structures of the various embodiments can be used in combination, or in substitution with each other as desired. That one feature is not illustrated in all of the embodiments is not meant to be construed that it cannot be so illustrated, but is done for brevity of description. Thus, the various features of the different embodiments can be mixed and matched as desired to form new embodiments, whether or not the new embodiments are expressly described. All combinations or permutations of features described herein are covered by this disclosure.

This written description uses examples to describe aspects of the disclosure described herein, including the best mode, and also to enable any person skilled in the art to practice aspects of the disclosure, including making and using any devices or systems and performing any incorporated methods. The patentable scope of aspects of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Further aspects are provided by the subject matter of the following clauses:
An airfoil assembly for a turbine engine, the airfoil assembly comprising an airfoil comprising a wall bounding an interior and defining an exterior surface, the wall extending between a leading edge and a trailing edge to define a chordwise direction, and between a root and a tip to define a spanwise direction, a trunnion having a wall with an interior surface defining a flared socket with an open top, a spar extending from the flared socket, through the open top of the flared socket, and into the interior of the airfoil, the spar having a furcated tail with a set of branches and an intervening gap defined between each adjacent branch of the set of branches, and a wedge received within at least one intervening gap for retaining the spar against the interior surface within the flared socket.

A turbine engine comprising an airfoil assembly having an airfoil comprising a wall bounding an interior and defining an exterior surface, the wall extending between a leading edge and a trailing edge to define a chordwise direction, and between a root and a tip to define a spanwise direction, a trunnion having a wall with an interior surface defining a flared socket with an open top, a spar extending from the flared socket, through the open top of the flared socket, and into the interior of the airfoil, the spar having a furcated tail with a set of branches and an intervening gap defined between each adjacent branch of the set of branches, and a wedge received within at least one intervening gap for retaining the spar against the interior surface within the flared socket.

A turbine engine comprising an airfoil assembly having a composite airfoil, a metal trunnion having a wall with an interior surface defining a flared socket with an open top, a composite spar extending from the flared socket, through the open top, and into an interior of the composite airfoil, the composite spar having a furcated tail defining first and second branches with an intervening gap therebetween, and a wedge received within the intervening gap for retaining the composite spar against the interior surface within the flared socket.

An airfoil assembly, comprising a composite airfoil, a metal trunnion having a wall with an interior surface defining a flared socket with an open top, a composite spar extending from the flared socket, through the open top, and into an interior of the composite airfoil, the composite spar having a furcated tail defining first and second branches with an intervening gap therebetween, and a wedge received within the intervening gap for retaining the composite spar against the interior surface within the flared socket.

The airfoil assembly of any preceding clause, wherein the at least one intervening gap includes a first intervening gap and one of the one or more additional intervening gaps, with the wedge being received within the first intervening gap and an insert being received within each of the one of the one or more additional intervening gaps, the at least one insert being used to increase the thickness of the furcated tail.

The airfoil assembly of any preceding clause, wherein the spar includes a first composite material and the insert includes a second composite material.

The airfoil assembly of any preceding clause, wherein the first composite material is different from the second composite material.

The airfoil assembly of any preceding clause, wherein the first composite material is the same as the second composite material.

The airfoil assembly of any preceding clause, wherein the each of the one or more additional intervening gaps is smaller than the first intervening gap.

The airfoil assembly of any preceding clause, wherein the one or more additional intervening gaps includes second and third intervening gaps with the first intervening gap positioned therebetween.

The airfoil assembly of any preceding clause, wherein the spar extends along a centerline axis in the spanwise direction, with the furcated tail being symmetric about the centerline axis.

The airfoil assembly of any preceding clause, wherein the trunnion includes a metallic material and the spar includes a composite material.

The airfoil assembly of any preceding clause, wherein the spar extends along a centerline axis in the spanwise direction, the spar including a rectangular cross-sectional area when viewed along a horizontal plane perpendicular to the centerline axis.

The airfoil assembly of any preceding clause, wherein the flared socket includes a circular cross-sectional area when viewed along the horizontal plane.

The airfoil assembly of any preceding clause, further comprising at least one spacer provided between an inner wall of the flared socket and the spar such that the spar, the trunnion and the spacer form a continuous cross-sectional area when viewed along the horizontal plane.

The airfoil assembly of any preceding clause, wherein the spar extends along a centerline axis in the spanwise direction, and the open top includes a rectangular cross-sectional area when viewed along a plane perpendicular to the centerline axis.

The airfoil assembly of any preceding clause, further comprising a retention block provided inwardly from the furcated tail in the spanwise direction, the retention block pressing against at least the wedge and the furcated tail to retain the wedge within the intervening gap.

The airfoil assembly of any preceding clause, wherein the retention block is threaded into the trunnion.

The airfoil assembly of any preceding clause, wherein the retention block includes a composite or a metallic material.

The airfoil assembly of any preceding clause, wherein the airfoil is a composite fan blade provided within the fan section of the turbine engine.

The airfoil assembly of any preceding clause, wherein at least one of the spar, the trunnion or the wedge includes a composite material that is at least one of a polymer matrix composite, a ceramic matrix composite, a metal matrix composite, a carbon fiber, a polymeric resin, a thermoplastic resin, a bismaleimide material, a polyimide material, an epoxy resin, a glass fiber, or a silicon matrix material.

The airfoil assembly of any preceding clause, further comprising a set of inserts provided within a portion of the furcated tail, the set of inserts being used to increase a thickness of the furcated tail.

The airfoil assembly of any preceding clause wherein the airfoil includes a composite material.

The airfoil assembly of any preceding clause, further comprising a set of inserts provided within a portion of the furcated tail, the set of inserts being used to increase a thickness of the furcated tail.

## Claims

1. An airfoil assembly (130, 230, 330, 430) for a turbine engine (10), the airfoil assembly (130, 230, 330, 430) comprising:
an airfoil (132) comprising a wall (138) bounding an interior (148) and defining an exterior surface, the wall (138) extending between a leading edge (144) and a trailing edge (146) to define a chordwise direction (C), and between a root (140) and a tip (142) to define a spanwise direction (S);
a trunnion (134, 234, 334, 434) having a wall with an interior surface (162, 262, 362, 462) defining a flared socket (164, 264, 364, 464) with an open top (170, 270, 370, 470);
a spar (136, 236, 336, 436) extending from the flared socket (164, 264, 364, 464), through the open top (170, 270, 370, 470) of the flared socket (164, 264, 364, 464), and into the interior (148) of the airfoil (132), the spar (136, 236, 336, 436) having a furcated tail (152, 252, 352) with a set of branches (154, 254, 354, 156, 256, 356, 376, 377) and an intervening gap (158, 258, 358) defined between each adjacent branch of the set of branches (154, 254, 354, 156, 256, 356, 376, 377); and
a wedge (172, 272, 372, 472) received within at least one intervening gap (158, 258, 358) for retaining the spar (136, 236, 336, 436) against the interior surface (162, 262, 362, 462) within the flared socket (164, 264, 364, 464).

2. The airfoil assembly (130, 230, 330, 430) of claim 1, wherein the at least one intervening gap (158, 258, 358) includes a first intervening gap (158, 258, 358) and one or more additional intervening gaps (158, 258, 358), with the wedge (172, 272, 372, 472) being received within the first intervening gap (158, 258, 358) and an insert being received within each one of the one or more additional intervening gaps (158, 258, 358), the insert being used to increase a thickness of the furcated tail (152, 252, 352).

3. The airfoil assembly (130, 230, 330, 430) of claim 2, wherein the spar (136, 236, 336, 436) includes a first composite material and the insert includes a second composite material.

4. The airfoil assembly (130, 230, 330, 430) of claim 3, wherein the first composite material is different from the second composite material.

5. The airfoil assembly (130, 230, 330, 430) of claim 3, wherein the first composite material is the same as the second composite material.

6. The airfoil assembly (130, 230, 330, 430) of claim 2, wherein each one of the one or more additional intervening gaps (158, 258, 358) is smaller than the first intervening gap (158, 258, 358).

7. The airfoil assembly (130, 230, 330, 430) of claim 2, wherein the one or more additional intervening gaps (158, 258, 358) includes second and third intervening gaps (158, 258, 358) with the first intervening gap (158, 258, 358) positioned therebetween.

8. The airfoil assembly (130, 230, 330, 430) of any of claims 1-7, wherein the spar (136, 236, 336, 436) extends along a centerline axis (150, 250, 350, 450) in the spanwise direction (S), with the furcated tail (152, 252, 352) being symmetric about the centerline axis (150, 250, 350, 450).

9. The airfoil assembly (130, 230, 330, 430) of any of claims 1-8, wherein the trunnion (134, 234, 334, 434) includes a metallic material and the spar (136, 236, 336, 436) includes a composite material.

10. The airfoil assembly (130, 230, 330, 430) of any of claims 1-9, wherein the spar (136, 236, 336, 436) extends along a centerline axis (150, 250, 350, 450) in the spanwise direction (S), the spar (136, 236, 336, 436) including a rectangular cross-sectional area when viewed along a horizontal plane perpendicular to the centerline axis (150, 250, 350, 450).

11. The airfoil assembly (130, 230, 330, 430) of claim 11, further comprising at least one spacer provided between an inner wall (138) of the flared socket (164, 264, 364, 464) and the spar (136, 236, 336, 436) such that the spar (136, 236, 336, 436), the trunnion (134, 234, 334, 434) and the spacer form a continuous cross-sectional area when viewed along the horizontal plane.

12. The airfoil assembly (130, 230, 330, 430) of any of claims 1-11, wherein the spar (136, 236, 336, 436) extends along a centerline axis (150, 250, 350, 450) in the spanwise direction (S), and the open top (170, 270, 370, 470) includes a rectangular cross-sectional area when viewed along a plane perpendicular to the centerline axis (150, 250, 350, 450).

13. The airfoil assembly (130, 230, 330, 430) of any of claims 1-12, further comprising a retention block provided inwardly from the furcated tail (152, 252, 352) in the spanwise direction (S), the retention block pressing against at least the wedge (172, 272, 372, 472) and the furcated tail (152, 252, 352) to retain the wedge (172, 272, 372, 472) within the intervening gap (158, 258, 358).

14. The airfoil assembly (130, 230, 330, 430) of claim 13, wherein the retention block is threaded into the trunnion (134, 234, 334, 434).

15. The airfoil assembly (130, 230, 330, 430) of any of claims 1-14, wherein at least one of the spar (136, 236, 336, 436), the trunnion (134, 234, 334, 434) or the wedge (172, 272, 372, 472) includes a composite material that is at least one of a polymer matrix composite, a ceramic matrix composite, a metal matrix composite, a carbon fiber, a polymeric resin, a thermoplastic resin, a bismaleimide material, a polyimide material, an epoxy resin, a glass fiber, or a silicon matrix material.
